# EUROPÄISCHE PATENTSCHRIFT

(11) **EP 2 479 442 B1**
(45) Veröffentlichungstag und Bekanntmachung des Hinweises auf die Patenterteilung: **25.05.2016**
(21) Anmeldenummer: 12000051.8
(22) Anmeldetag: 05.01.2012
(51) Int. Cl.: F16B 37/06, B21J 15/02

(54) **Funktionselement in Form eines Einpresselements**
Function element in the form of a press element
Elément de fonction sous la forme d'un élément de compression

(30) Priorität: 20.01.2011 DE 102011009012
(43) Veröffentlichungstag der Anmeldung: 25.07.2012
(73) Patentinhaber: Profil Verbindungstechnik GmbH & Co. KG, 61381 Friedrichsdorf (DE)
(72) Erfinder: Babej, Jiri, 35423 Lich (DE)
(74) Vertreter: Manitz, Finsterwald & Partner GbR

(56) Entgegenhaltungen:
- EP-A1- 2 141 370
- WO-A1-2005/050034
- DE-C1- 3 704 763
- US-A- 3 399 409

## Beschreibung

Die vorliegende Erfindung betrifft ein Funktionselement in Form eines Einpresselements zur Anbringung an ein Blechteil. Dabei kann das Funktionselement entweder als männliches Element oder als weibliches Element ausgebildet werden. Als männliches Element kommt ein Bolzenelement in Frage, dessen Schaftteil mit einem Gewinde versehen ist, oder ein Element, dessen Schaftteil mit einer Aufnahme für einen Clip oder dergleichen ausgebildet ist, oder ein Element, dessen Schaftteil zylindrisch ausgeführt ist und als Lagerung für ein auf dem Element drehbares Teil dient.

Bei einem weiblichen Element kommt vornehmlich ein Mutterelement in Frage, d.h. ein Element mit einem Innengewinde, wobei der Schaftteil als Stanzabschnitt ausgebildet werden kann, so dass ein selbststanzendes Mutterelement vorliegt. Das Gewinde muss nicht vorgefertigt sein, sondern könnte nach der Anbringung des Mutterelements an ein Blechteil mittels einer gewindeformenden oder -schneidenden Schraube erzeugt werden. Das weibliche Element kann aber auch ein hohles Element mit einem zylindrischen Hohlraum sein, der zur drehbaren Lagerung einer Welle dient.

Funktionselemente sind in den verschiedensten Ausführungen im Stand der Technik bekannt. Einerseits gibt es so genannte Nietelemente, die einen Nietabschnitt aufweisen, der bei der Anbringung an ein Blechteil verformt wird, um ein Nietbördel auszubilden, das mit dem Kopfteil eine ringförmige Aufnahme zur Aufnahme des Randes eines Loches im Blechteil bildet. Bei solchen Nietelementen wird also das Funktionselement bei der Anbringung an das Blechteil verformt. Typische Beispiele für solche Nietelemente sind die NBR-Bolzenelemente der vorliegenden Anmelderin bzw. die RND-Mutterelemente der vorliegenden Anmelderin (europäisches Patent 1116891). Ferner sind so genannte Einpresselemente bestens bekannt, bei denen das Element selbst bei der Anbringung an ein Blechteil nicht absichtlich verformt wird, sondern das Blechmaterial selbst wird verformt, um dieses in Eingriff mit Hinterschneidungen des jeweiligen Einpresselements zu bringen. Auch hier sind verschiedene Bolzenelemente und Mutterelemente bekannt.

Als Bolzenelemente können die so genannten EBF-Bolzen der vorliegenden Anmelderin (europäisches Patent 678679) und als Mutterelement die so genannten RSU-Elemente (europäisches Patent 759510) der vorliegenden Anmelderin genannt werden.

Zum Stand der Technik soll an dieser Stelle auch auf die EP-A-2141370 und die US-A-3399409 verwiesen werden, die jeweils ein Einpresselement in Form eines Mutterelements zur Befestigung an ein Blechteil zeigen, das sich dadurch auszeichnet, dass das Einpresselement bzw. Funktionselement einen Kopfteil und einen Schaftteil aufweist, der Kopfteil auf der dem Schaftteil zugewandten Seite eine ringförmige Blechanlagefläche und innerhalb dieser ringförmigen Blechanlagefläche eine ringförmige axiale Vertiefung aufweist, die am Übergang des Kopfteils in den Schaftteil diesen umgibt, wobei der Schaftteil mehrere umfangsmäßig verteilte, sich in axialer Richtung erstreckende radiale Vertiefungen und dazwischen sich ebenfalls axial erstreckende und radial hervorstehende Nasen aufweist.

Die Aufgabe der vorliegenden Erfindung ist es, ein Funktionselement in Form eines Einpresselements der unmittelbar oben genannten Art zur Verfügung zu stellen, das eine Alternative zu den genannten Elementen und zu dem EBF-Element oder dem RSU-Element darstellt, das einwandfrei herstellbar ist und das eine angemessene Verdrehsicherheit bzw. einen angemessenen axialen Auspresswiderstand bietet.

Eine solche Verdrehsicherheit ist deshalb notwendig, da bei Anbringung des Funktionselements an ein Blechteil und der anschließenden Anbringung einer Mutter auf dem Bolzenelement bzw. die Einführung eines Bolzens in ein Mutterelement, um ein weiteres Bauteil gegen das Blechteil zu sichern, nicht unerhebliche Drehmomente auftreten, die sonst zu einer Lockerung des Bolzenelements bzw. des Mutterelements führen können. Solche Drehmomente entstehen auch bei dem Lösen der entsprechenden Schraubverbindung. Ferner ist ein axialer Auspresswiderstand sowie ein Ausknöpfwiderstand deshalb von Bedeutung, weil Blechteile, die mit den jeweiligen Funktionselementen ausgestattet sind, häufig als Schüttgut in Kisten von einem Werk zum anderen oder innerhalb eines Werkes transportiert werden. Dies kann zu einer Lockerung des Funktionselements in den einzelnen Blechteilen führen, was für die spätere Verarbeitung nachteilig ist. Ferner wird häufig bei der Anbringung eines weiteren Bauteils auf das mit einem Funktionselement ausgestattete Blechteil mit automatischen Schraubwerkzeugen gearbeitet, die bei der Anbringung einer Mutter auf ein Bolzenelement bzw. beim Einschrauben eines Bolzens in ein Mutterelement nicht unerhebliche Axialkräfte auf das jeweilige Funktionselement ausüben, wodurch die Gefahr einer Lockerung des Funktionselements im Blechteil bzw. eines Versagens der Verbindung zwischen dem Blechteil und dem Funktionselement besteht, wenn die Verdrehsicherheit, der Auspresswiderstand und der Ausknöpfwiderstand nicht im erforderlichen Maße gewährleistet sind.

Zur Lösung der oben genannten Aufgabe wird erfindungsgemäß ein Funktionselement gemäß Anspruch 1 vorgesehen. D.h. es wird ein Funktionselement in Form eines Einpresselements zur Befestigung an ein Blechteil vorgesehen, wobei das Funktionselement einen Kopfteil und einen Schaftteil aufweist, der Kopfteil auf der dem Schaftteil zugewandten Seite eine ringförmige Blechanlagefläche aufweist und innerhalb dieser ringförmigen Blechanlagefläche eine ringförmige axiale Vertiefung aufweist, die am Übergang des Kopfteils in den Schaftteil diesen umgibt, wobei der Schaftteil mehrere umfangsmäßig verteilte, sich in axialer Richtung erstreckende radiale Vertiefungen und dazwischen sich ebenfalls axial erstreckende und radial hervorstehende Nasen aufweist mit dem besonderen Kennzeichen, dass an den Stellen der radialen Vertiefungen, an deren dem Kopfteil zugewandten axialen Enden Materialerhöhungen vorhanden sind, die im Bereich der ringförmigen Vertiefung mit dem Kopfteil Hinterschneidungen bilden.

Durch eine solche Ausbildung des Funktionselements kann das Blechmaterial in engen Kontakt mit den radial vorstehenden Nasen bzw. mit den Bodenflächen der radialen Vertiefungen gebracht werden, so dass hier und insbesondere an den vorzugsweise radial gerichteten Flanken der Nasen eine Verdrehsicherung erreicht wird. Darüber hinaus kann das Blechmaterial in die genannten Hinterschneidungen eingebracht werden, die durch die Materialerhöhungen gebildet werden, wodurch ein axialer Auspresswiderstand erzeugt wird. Ferner kann das Blechmaterial in Umfangsrichtung betrachtet an den seitlichen Begrenzungen der Materialerhöhungen anliegen, wodurch eine zusätzliche Verdrehsicherung erzeugt wird.

Bei der Ausbildung des Schaftteils als Gewinde wird das Blechmaterial ferner so verformt, dass der dem Kopfteil des Funktionselements abgewandte Bereich des Blechmaterials dem dem Kopfteil zugewandten axialen Ende des Gewindes gegenüberliegt und radial innerhalb des Außendurchmessers des Gewindes liegt.

Da das Gewinde durch einen Gewindewalzvorgang nach der Herstellung der radialen Vertiefungen und der Nasen erfolgt, begünstigt die mit dem Gewindewalzen einhergehende Vergrößerung des Schaftteils die vorherige Herstellung der radialen Vertiefungen und Nasen, da dann der Schaftteil im Bereich des noch herzustellenden Gewindes einen kleineren Durchmesser aufweist, der die Erzeugung der genannten Vertiefungen und Nasen durch das axiale Verschieben des Materials des Schaftteils vereinfacht. Wenn diese Situation nicht vorliegt, müssten die radialen Vertiefungen durch eine radiale Verformung des Schaftteils erzeugt werden, was grundsätzlich möglich wäre.

Die Vergrößerung des Durchmessers im Bereich des Gewindes nach dessen Herstellung bildet einen an den dem Kopfteil abgewandten axialen Enden der genannten Vertiefungen und Nasen angrenzenden Gewindeauslauf, der als Anschlag für das Blechmaterial dient und den Auspresswiderstand sicherstellt. Falls die genannten Materialerhöhungen und entsprechende Hinterschneidungen vorgesehen sind, ergänzt der Eingriff des Blechmaterials in den Hinterschneidungen den Auspresswiderstand. Falls bei einem Bolzenelement der Gewindeauslauf nicht vorliegt, bildet der Eingriff des Blechmaterials in den Hinterschneidungen alleine den erforderlichen Formschluss zur Erzeugung des Auspresswiderstands.

Bei einem weiblichen Element kann ein entsprechender im Durchmesser vergrößerter und als Anschlag dienender Bereich am freien Endabschnitt des Schaftteils vorgesehen werden und den Auspresswiderstand in entsprechender Weise zu dem Gewindeauslauf d sicherstellen. Sollte eine solche Formgebung nicht vorliegen, ist dann das Vorhandensein der genannten Hinterschneidungen und ein Eingriff des Blechmaterials in diesen erforderlich, um den erforderlichen Formschluss zur Erzeugung des Auspresswiderstands zu erzeugen.

Selbst bei einer geringfügigen Lockerung des Funktionselements im Blechteil ist ein axialer Verlust des Elements nicht ohne weiteres möglich, da das Blechmaterial gegen das Ende des Gewindes anstoßen wird. Eine derartige Sicherung ist auch bei der Ausbildung als Mutterelement gegeben, sofern der Schaftteil auf der dem Kopfteil abgewandten Seite der Nasen bzw. der axialen Vertiefungen einen größeren Durchmesser als im Bereich der Nasen aufweist, wodurch das Funktionselement nicht aus dem Blechteil herausgepresst werden kann. Ein solches Herauspressen wird deshalb vermieden, da die Schulter, die am Übergang zu dem einen größeren Durchmesser aufweisenden Bereich gegen die dem Kopfteil des Mutterelements abgewandte Seite des Blechteils anstößt bzw. anstoßen wird.

Bei beiden Ausführungsvarianten, d.h. als männliches oder weibliches Element, ist ein axialer Verlust des Elements in die andere Richtung schon deshalb nicht möglich, weil die radiale Blechanlagefläche des Kopfteils an dem Blechteil anliegt und einen deutlich größeren Durchmesser aufweist als das Loch im Blechteil. Somit wird ein axialer Verlust in beiden axialen Richtungen verhindert.

Ferner wird das Blechmaterial bei der Anbringung des Funktionselements axial innerhalb der ringförmigen Vertiefung und radial an die sich umfangsmäßig abwechselnden vorspringenden Nasen und radialen Vertiefungen in Kontakt gebracht, wodurch sich eine besonders stabile Form ergibt, die auch gegen Ausknöpfkräfte widerstandsfähig ist. Die dort entstehende Lochlaibung unterstützt auch die Verdrehsicherheit und den Auspresswiderstand.

Durch die Größe des Kopfteils bzw. des Durchmessers der Blechanlagefläche in Kombination mit dem Formschluss mit dem Blechmaterial und dem axialen Auspresswiderstand wird somit auch ein ausreichender Ausknüpfwiderstand der Elemente sichergestellt.

Durch die Verformung des Blechmaterials in die ringförmige Vertiefung hinein, wird ferner eine satte Anlage des Kopfteils auf dem Blechteil erreicht, wodurch Verformungen und Verwerfungen des Blechteils im Bereich des Kopfteils des Elements vermieden werden können. Die Ringnut bildet ferner einen Aufnahmeraum für das Material, das durch die Erzeugung der radialen Nuten bzw. Vertiefungen entsteht, so dass die entsprechenden Materialerhöhungen den Übergang vom Kopfteil in den Schaftteil nicht stören.

Ferner ist die Anbindung zwischen dem Funktionselement und dem Blechteil im Bereich des Übergangs vom Schaftteil in den Kopfteil so realisierbar, dass hier ein verhältnismäßig kleiner Durchmesser des Schaftteils und des Loches im Blechteil vorliegt, so dass die spätere Anbringung eines weiteren Bauteils an der dem Kopfteil des Funktionselements abgewandten Seite des Blechteils ohne Komplikationen von statten gehen kann und das weitere Bauteil lediglich eine entsprechende Lochung aufweisen muss. Diese Anbringung eines weiteren Bauteils auf das Blechteil kann daher so erfolgen, dass die erwünschte "direkte Klemmung" möglich ist, und zwar ohne mit lastverteilenden gelochten Scheiben arbeiten zu müssen.

Vorzugsweise werden von zwei bis zwölf radiale Vertiefungen, vorzugsweise vier bis acht und insbesondere sechs radiale Vertiefungen vorgesehen, wobei jede radial vorstehende Nase zwischen zwei benachbarten radialen Vertiefungen vorgesehen ist, d.h. die Vertiefungen und Nasen sind abwechselnd um die Längsachse des Funktionselements angeordnet.

Die Hinterschneidungen befinden sich vorzugsweise axial innerhalb der ringförmigen axialen Vertiefung. An dieser Stelle gelangen die genannten Materialerhöhungen des Schaftteils in einen hochwertigen gesicherten Eingriff mit dem Blechmaterial, ohne Verwerfungen des Blechmaterials zu verursachen, zumal das Blechmaterial beim Stauchen in die axiale Ringvertiefung des Kopfteils ausweichen kann.

Bei dem Funktionselement handelt es sich somit in einer Variante um ein an seinem Schaftteil ein Gewinde aufweisendes Bolzenelement, wobei der Außendurchmesser des Gewindes einen Radius aufweist, der größer ist als die (maximale) radiale Abmessung von der Längsachse des Schaftteils zu der Bodenfläche der radialen Vertiefungen.

Ferner weist der Außendurchmesser des Gewindes einen Radius auf, der größer ist als die (maximale) radiale Abmessung von der Längsachse des Schaftteils zu der radial äußeren Fläche der radial vorstehenden Nasen.

Die Bodenflächen der radialen Vertiefungen und/oder die äußeren Flächen der Nasen liegen vorzugsweise zumindest im Wesentlichen auf jeweiligen kreiszylindrischen Flächen bzw. sie bilden Segmente von solchen kreiszylindrischen Flächen. Die Bodenflächen der Vertiefungen haben dann eine kontante radiale Abmessung wie auch die äußeren Flächen der Nasen. Dies ist allerdings nicht zwingend erforderlich, da andere Konturen der entsprechenden Flächen möglich wären, wodurch die genannten radialen Abmessungen nicht konstant wären, jedoch von der maximalen radialen Abmessung gesprochen werden kann.

Da die genannten maximalen radialen Abmessungen der sich abwechselnden Nasen und Vertiefungen vorzugsweise kleiner sind als der Außendurchmesser des Gewindes, kann sichergestellt werden, dass das Blechmaterial radial innerhalb des Außendurchmessers des Gewindes liegt und die vorerwähnte axiale Sicherung des Bolzenelements gewährleistet ist.

Dabei können die die Hinterschneidungen bildenden Materialerhöhungen eine von der mittleren Längsachse des Funktionselements gemessene maximale radiale Abmessung aufweisen, die der radialen Abmessung des Gewindes zumindest im Wesentlichen entspricht oder gar etwas größer ist, wodurch eine bessere Verdrehsicherheit erreichbar ist.

Das Gewinde ist vorzugsweise an seinem dem Kopfteil zugewandten Ende unmittelbar vor den dem Kopfteil abgewandten Enden der radialen Vertiefungen bzw. der Nasen angeordnet. Hierdurch wird nicht nur der erwünschte "Anschlag" für das Blechmaterial an einer günstigen Stelle gebildet, sondern das Gewinde kann unproblematisch durch einen Gewindewalzvorgang hergestellt werden, da die axiale Länge der Nasen und Vertiefungen bedeutet, dass das Gewinde vor dem Kopfteil ausläuft. Dies erleichtert den Gewindewalzvorgang, da dieser nicht mehr, wie beim EBF-Bolzen, bis unmittelbar vor dem Kopfteil durchgeführt wird.

Wenn es sich bei dem Einpresselement um ein hohles Element handelt, dessen hohle mittlere Passage mit einem Gewinde versehen ist oder versehbar ist, kann ebenfalls der Schaftteil auf der dem Kopfteil abgewandten Seite der Nasen und Vertiefungen mit einem Durchmesser ausgeführt werden, der größer ist als der Durchmesser des Schaftteils im Bereich der Nasen. Dies kann beispielsweise durch einen axialen Stauchvorgang erreicht werden.

Ferner kann das freie Stirnende des Schafteils, egal ob der Durchmesser größer ist als der Durchmesser des Schaftteils im Bereich der Nasen, zum Durchstanzen des Blechteils ausgebildet werden, so dass das Mutterelement beim Einsetzen in das Blechteil zusammen mit einer geeigneten Matrize das eigene Loch im Blechteil schneidet. D.h. das Mutterelement wird selbststanzend ausgebildet.

Bei der Anbringung des erfindungsgemäßen Funktionselements an ein Blechteil entsteht ein Zusammenbauteil mit dem besonderen Kennzeichen, dass das Blechteil sich innerhalb der Ringvertiefung in den axialen Vertiefungen und in den Hinterschneidungen erstreckt und hierdurch den erforderlichen Auspresswiderstand bzw. die erforderliche Verdrehsicherheit gewährleistet.

Das Zusammenbauteil ist vorzugsweise so ausgelegt, dass die dem Kopfteil abgewandte Seite des Blechteils im Bereich benachbart zum Schaftteil bei einem Bolzenelement unmittelbar vor dem dem Kopfteil zugewandten Ende des Gewindes und bei einem hohlen Element unmittelbar vor einem Endabschnitt des hohlen Schaftteils angeordnet ist.

Gerade bei relativ dünnen Blechteilen bis etwa 1 bis 1,5 mm Dicke wird das Zusammenbauteil so ausgelegt, dass das Blechteil auf der dem Kopfteil abgewandten Seite einen ringförmigen Kragen aufweist, dessen radial innere Fläche eng an den Nasen bzw. den Bodenflächen der radialen Vertiefungen anliegt. Dabei kann der Ringkragen eine axiale Länge unterhalb der Blechunterseite von beispielsweise 1 bis 3 mm aufweisen, in etwa entsprechend der Länge der Nasen.

Bei dickeren Blechteilen ab 1 oder 1,5 mm Dicke wird das Blechteil durch eine Nase bzw. eine Ringnase einer Matrize so eingeprägt, dass das Blechmaterial sich zumindest im Wesentlichen über die ganze axiale Länge der Nasen erstreckt. Ein großer Vorteil des Funktionselements der Erfindung ist, das ein Element mit Blechteilen verschiedener Dicken verwendet werden kann, beispielsweise von 0,6 bis 4 mm, was die Lagerhaltung und die Kosten für den Anwender günstiger gestaltet.

Durch die Stauchung des Blechmaterials durch die entsprechende Matrize bei der Anbringung an das Blechteil wird das Blechmaterial zum Fließen gebracht und liegt dadurch zwischen den Materialerhöhungen an der Oberfläche des Elements an.

Ein Verfahren zur Herstellung des erfindungsgemäßen Funktionselements in Form eines männlichen Elements zeichnet sich dadurch aus, dass man von einem zylindrischen Metallstab oder Draht ausgeht, und in einem Kaltschlagverfahren einen Rohling mit einem Kopfteil, mit einem Schaftteil sowie mit einer ringförmigen axialen Vertiefung, die den Schaftteil auf der dem Schaftteil zugewandten Seite des Kopfteils umgibt, und mit einem Materialbund um den Schaftteil im Bereich benachbart zum Kopfteil erzeugt, dass durch ein weiteres Kaltschlagen das Material des Bundes stellenweise verschoben wird, um die sich in axialer Richtung erstreckende radiale Vertiefungen und die Hinterschneidungen bildende Materialerhöhungen an den dem Kopfteil zugewandten Enden der radialen Vertiefungen sowie zwischen den radialen Vertiefung angeordneten Nasen auszubilden, und anschließend ein Gewinde auf dem Schaftteil kurz vor oder unmittelbar vor den dem Kopfteil abgewandten axialen Enden der radialen Vertiefungen ausgebildet wird.

Ein Verfahren zur Herstellung eines Funktionselements in Form eines weiblichen Elements zeichnet sich dadurch aus, dass man von einem zylindrischen Metallstab oder Draht ausgeht, und in einem Kaltschlagverfahren einen Rohling mit einem Kopfteil, mit einem Schaftteil sowie mit einer ringförmigen axialen Vertiefung, die den Schaftteil auf der dem Schaftteil zugewandten Seite des Kopfteils umgibt und mit einem Materialbund um den Schaftteil im Bereich benachbart zum Kopfteil erzeugt, dass durch ein weiteres Kaltschlagen das Material des Bundes stellenweise verschoben wird, um die sich in axialer Richtung erstreckenden radialen Vertiefungen und die Hinterschneidungen bildenden Materialerhöhungen an den dem Kopfteil zugewandten Enden der radialen Vertiefungen sowie zwischen den radialen Vertiefungen angeordneten Nasen auszubilden, und dass eine sich axial erstreckende mittlere Passage im Schaftteil und im Kopfteil ausgebildet wird.

Dabei kann das freie Stirnende des Mutterelements gestaucht werden, um den Radius des Stirnendes der Längsachse zu erhöhen, damit dieser größer ist als der des Schaftteils im Bereich der radialen Vertiefungen und vorzugsweise der des Schaftteils im Bereich der Nasen, und gegebenenfalls um eine Stanzkante am freien Ende des Schaftteils auszubilden.

Die Erfindung wird nachfolgend anhand der beigefügten Zeichnungen näher erläutert, in welchen zeigen:
- Fig. 1A: eine perspektivische Darstellung eines erfindungsgemäßen Funktionselements in Form eines Bolzenelements,
- Fig. 1B-1D: Darstellungen des erfindungsgemäßen Bolzenelements der Fig. 1A in einer teilweise in Längsrichtung geschnittenen Seitenansicht (Fig. 1B), eine vergrößerte Darstellung des in Fig.1B eingekreisten Bereiches bei dem Übergang des Kopfteils in den Schaftteil (Fig. 1C) und eine Stirnansicht auf das freie Stirnende des Schaftteils des Bolzenelements (Fig. 1D),
- Fig. 2A-2C: eine Zeichnungsreihe zur Darstellung der Anbringung des Bolzenelements gemäß den Fig. 1A bis 1D an ein verhältnismäßig dickes Blechteil,
- Fig. 3A-3C: eine Zeichnungsreihe zur Darstellung der Anbringung des Bolzenelements gemäß den Fig. 1A bis 1D an ein verhältnismäßig dünnes Blechteil,
- Fig. 4A-4D: eine Zeichnungsreihe entsprechend den Fig. 1A bis 1D, jedoch für ein erfindungsgemäßes Funktionselement in Form eines Mutterelements,
- Fig. 5A-5C: eine Zeichnungsreihe zur Darstellung der Anbringung des Mutterelements gemäß den Fig. 4A bis 4D an ein verhältnismäßig dickes Blechteil und
- Fig. 6A-6C: eine Zeichnungsreihe zur Darstellung der Anbringung des Mutterelements gemäß den Fig. 4A bis 4D an ein verhältnismäßig dünnes Blechteil.

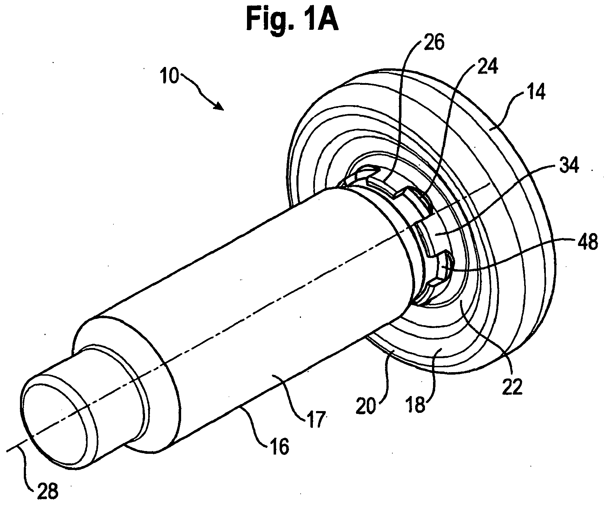

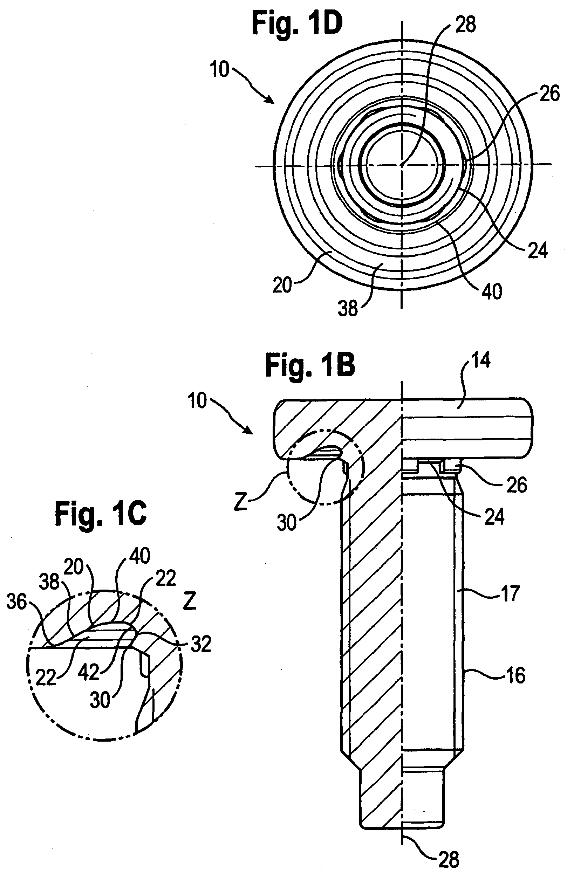

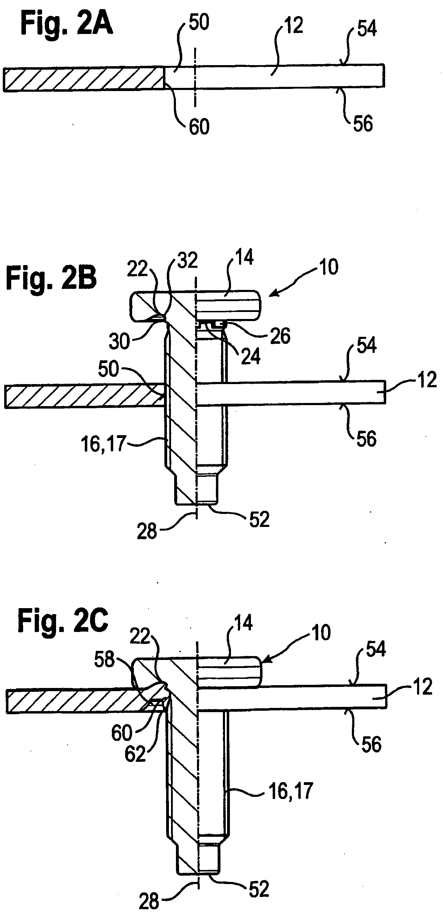

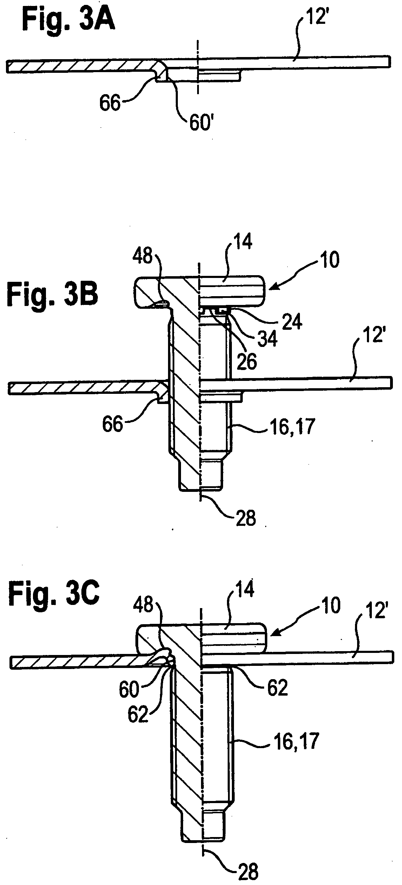

Bezug nehmend auf die Fig. 1A bis 1D ist dort ein Funktionselement 10 in Form eines Einpresselements gezeigt, das zur Befestigung an ein Blechteil 12 oder 12' gemäß den Fig. 2A bis 2C bzw. 3A bis 3C ausgelegt ist. Das Funktionselement 10 weist einen Kopfteil 14 und einen Schaftteil 16 auf. Der Kopfteil 14 hat auf der dem Schaftteil 16 zugewandten Seite 18 eine ringförmige Blechanlagefläche 20 und innerhalb dieser eine ringförmige axiale Vertiefung 22, die am Übergang des Kopfteils in den Schaftteil 16 diesen umgibt. Ferner weist der Schaftteil 16 in diesem Beispiel sechs umfangsmäßig verteilte, sich in axialer Richtung erstreckende radiale Vertiefungen 24 und dazwischen ebenfalls sechs sich axial erstreckende und radial hervorstehende Nasen 26 auf, die sich mit den radialen Vertiefungen um die mittlere Längsachse 28 des Bolzenelements abwechseln. An den Stellen der radialen Vertiefungen 24 liegen an deren dem Kopfteil zugewandten axialen Enden Materialerhöhungen 30 vor, die im Bereich der ringförmigen axialen Vertiefung 22 mit dem Kopfteil Hinterschneidungen 32 bilden.

Die sich axial erstreckenden radialen Vertiefungen werden bei der Herstellung des Elements aus einem zylindrischen Bereich eines Rohlings hergestellt, der den gleichen Durchmesser aufweist wie die radial äußeren Seiten 34 der Nasen 26.

Man sieht ferner, dass der Außendurchmesser des Gewindes 17 einen Radius aufweist, der größer ist als die (maximale) radiale Abmessung der Längsachse 28 des Schaftteils 16 zu der Bodenfläche 48 der radialen Vertiefungen 24. Ferner sieht man, dass der Außendurchmesser des Gewindes 17 einen Radius aufweist, der größer ist als die (maximale) radiale Abmessung der Längsachse 28 des Schaftteils 16 zu der radial äußeren Fläche der radial vorstehenden Nasen 26.

Die Bodenflächen 48 der radialen Vertiefungen 24 und/oder die äußeren Flächen der Nasen 26 liegen in diesem Beispiel auf jeweiligen kreiszylindrischen Flächen bzw. sie bilden Segmente von solchen kreiszylindrischen Flächen. Das Bolzenelement hat somit im Bereich der Nasen eine Querschnittsform ähnlich der einer Keilwelle. Die Bodenflächen 48 der Vertiefungen 24 haben somit eine konstante radiale Abmessung wie auch die äußeren Flächen der Nasen 26.

Insbesondere aus der Fig. 1C geht die Formgebung der axialen Ringvertiefung 22 im Querschnitt hervor. Zunächst wird darauf hingewiesen, dass im Gegensatz zu einem EBF-Bolzen oder einer RND-Mutter keine sich radial erstreckenden Verdrehsicherungsrippen vorgesehen sind, die die Ringvertiefung bzw. die Ringnut 22 überbrücken. Die Ringvertiefung 22 hat eine radial außen liegende schräge Flanke 36, die mit einem gerundeten Übergang 38 in die ringförmige Blechanlagefläche 20 übergeht. Der Bodenbereich 40 der Ringnut ist ebenfalls mit einer sanften Rundung 42 ausgebildet und geht über eine gerundete Fläche (nicht ersichtlich, aber von der Form her entsprechend dem Radius 44 der Hinterschneidungen 32 gestaltet) in den Schaftteil 16 zwischen den Materialerhöhungen 30 über. Man sieht ferner aus der Fig. 1C, dass die Hinterschneidungen 32 sich axial innerhalb der Ringnut 22 befinden.

Die die Hinterschneidungen 32 bildenden Materialerhöhungen 30 haben eine von der mittleren Längsachse 28 des Funktionselements gemessene maximale radiale Abmessung, die der radialen Abmessung des Gewindes 17 zumindest im Wesentlichen entspricht oder gar etwas größer ist, wodurch eine bessere Verdrehsicherheit erreichbar ist.

Ansonsten hat die Ringvertiefung eine in etwa rechteckige Querschnittsform mit einer schräggestellten Flanke 36. Die genaue Querschnittsform ist nicht kritisch, doch sollen, wenn möglich, scharfe Kanten vermieden werden.

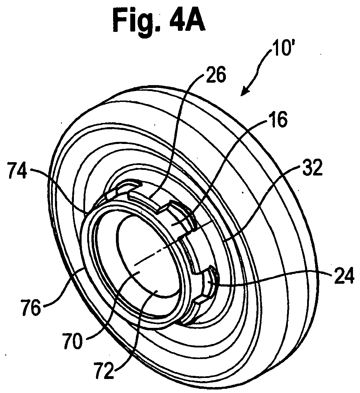

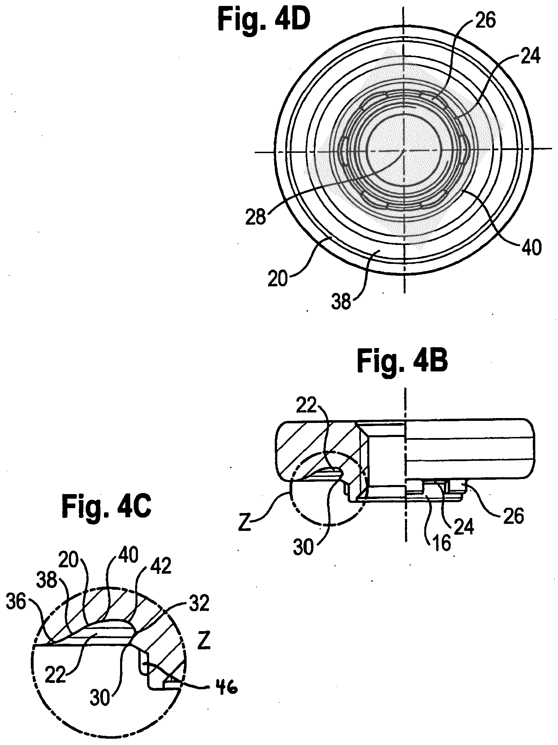

Die bevorzugten Abmessungen des Bolzenelements wie auch des Mutterelements 10' gemäß den Fig. 4A bis 4D können den maßstabsgetreuen Zeichnungen entnommen werden, wenn man als Grundmaße für die Skalierung den Durchmesser des Gewindes der Skalierung zugrunde legt, beispielsweise eines M6- oder M8-Gewindes.

Die Übergänge zwischen den Nasen 26 und den radialen Vertiefungen 24 sind vorzugsweise als radiale Flanken 46 ausgebildet, d.h. Flanken, die in radialen Ebenen zur Längsachse 28 liegen. Hierdurch kann die Verdrehsicherheit gewährleistet werden. Obwohl sechs Nasen 26 und sechs radiale Vertiefungen mit in etwa der gleichen Winkelerstreckung bevorzugt sind, kann eine andere Anzahl von Nasen 26 und radialen Vertiefungen 24 wie auch unterschiedliche Winkelerstreckungen dieser gewählt werden. Zu viele Nasen und radiale Vertiefungen, beispielsweise mehr als zwölf von beiden, sind normalerweise ungünstig, da es schwierig ist, diese auszubilden und zugleich eine hohe Verdrehsicherheit zu gewährleisten. Eine Anzahl der Nasen 26 und der radialen Vertiefung von weniger als drei oder vier macht es auch schwierig, die erwünschte Verdrehsicherheit sicherzustellen.

Die Fig. 2A bis 2C zeigen nun die Anbringung des Bolzenelements gemäß den Fig. 1A bis 1D an ein Blechteil 12, das hier als relativ dickes Blechteil mit einer Dicke von 3 mm bei einem M8-Gewinde zu verstehen ist. Bei der Anbringung des Bolzenelements, die in einer Presse oder in einem C-Gestell oder von einem Roboter in an sich bekannter Weise erfolgen kann, weist das vorgelochte (glattgelochte) Blechteil 12 (Fig. 2A) ein Loch bzw. Stanzloch 50 mit einer zylindrischen Gestalt mit einem Durchmesser entsprechend dem des Gewindes auf, d.h. in diesem Beispiel 8 mm.

Der Schaftteil 16 des von einem entsprechenden Werkzeug bzw. Setzkopf (nicht gezeigt) im Kopfteilbereich gehaltenen Bolzenelements 10 wird mit dem freien Stirnende 52 des Schaftteils 16 voran durch das Loch 50 hindurchgeführt (Fig. 2B). Anschließend, beispielsweise in einer weiteren Schließbewegung der Presse, wird der Kopfteil 14 gegen die Oberseite 54 des Blechteils 12 gedrückt, während dieses auf der Unterseite 56 auf einer Matrize (nicht gezeigt) abgestützt ist. Dabei hat die Matrize eine mittlere Öffnung, die den Schaftteil 16 des Bolzenelements aufnimmt, und eine von ihrer planaren Stirnseite vorstehende Ringnase mit einer Formgebung komplementär zu der der eingeprägten Ringvertiefung 58 in der Unterseite des Blechteils 12. Durch die Einprägung der Ringvertiefung 58 wird das Blechmaterial im Randbereich 60 des Loches 50 radial nach innen in die radialen Vertiefungen 24, zur Anlage an den Bodenflächen 48 dieser Vertiefungen sowie an die Außenseiten 34 der Nasen 26 und an den Flanken der Nasen 26 und ferner axial nach oben in die axiale Ringvertiefung 22 um die Materialerhöhungen 30 sowie in die Hinterschneidungen 32 gedrängt.

Das fertige Zusammenbauteil gestaltet sich wie in der Fig. 2C gezeigt, und es ist zu erkennen, das die Unterseite des Blechteils 12 im Bereich des Lochrandes 60 am Gewindeauslauf 62 anliegt. Hierdurch und durch den Eingriff des Blechmaterials in den Hinterschneidungen 32 wird verhindert, dass das Bolzenelement 10 nach oben aus dem Blechteil 12 herausgedrückt werden kann.

Ferner soll darauf hingewiesen werden, dass die Anlage des Blechmaterials am Gewindeauslauf auch bei dünneren Blechen möglich ist, wenn die entsprechende Matrize ausgelegt ist, um das Blechmaterial im Bereich des Lochrandes 60' so zu formen, dass eine ausreichende Ausdehnung des Blechmaterials in diesem umgeformten Bereich erfolgt. Die radial nach innen und axial nach oben gerichtete Bewegung des Blechmaterials wird besonders zweckmäßig durch geneigte Flanken der Ringnase der Matrize bewerkstelligt, die sich in den schräg gestellten Seiten 64 und 66 der Ringvertiefung 58 abbilden.

Die Anbringung des gleichen Bolzenelements 10 in ein relativ dünnes Blechteil ist in den Fig. 3A bis 3C gezeigt. Wie in Fig. 3A zu sehen, ist das Stanzloch dort mit einem nach unten ragenden Ringkragen 66 versehen, was durch eine an sich bekannte Blechvorbereitung wie bei einem EBF-Bolzen erfolgen kann.

Die Darstellung gemäß Fig. 3B entspricht der der Fig. 2B, abgesehen von dem dünneren Blechteil und der Anwesenheit des Ringkragens 66, und muss daher nicht extra beschrieben werden. Stattdessen gilt die bisherige Beschreibung auch für diese Figur. Auf jeden Fall gilt für die gesamte Figurenbeschreibung stets das Konzept, das gleiche Bezugszeichen für gleiche Merkmale oder Merkmale mit der gleichen Funktion zu verwenden, es sei denn, etwas Gegenteiliges wird gesagt. Aus der Fig. 3C ist ersichtlich, dass die Verprägung des Blechteils mit der Ringnase der Matrize auch mit einem dünnen Blechteil dazu führt, dass das Blechmaterial voll in Eingriff mit dem Schaftteil 16 des Bolzenelements im Bereich der Nasen 26 und der radialen Vertiefungen 24 gelangt. Dabei hat die nicht gezeigte Matrize auch hier eine mittlere Öffnung, die den Schaftteil 16 des Bolzenelements aufnimmt, und eine von ihrer planaren Stirnseite vorstehende Ringnase mit einer Formgebung komplementär zu der der eingeprägten Ringvertiefung 58 in der Unterseite des Blechteils 12, nur hat die Matrize hier eine Ringnase mit einer asymmetrischen Ausbildung, um die Form des Ringkragens zu berücksichtigen, und zwar so, dass die äußere schräge Seite der Ringvertiefung 58 länger ist als die innere schräge Seite. Durch die Einprägung der Ringvertiefung 58 wird auch hier das Blechmaterial im Randbereich 60 des Loches 50 vor allem im Bereich des Ringkragens 66 radial nach innen in die radialen Vertiefungen 24, zur Anlage an den Bodenflächen 48 dieser Vertiefungen sowie an die Außenseiten 34 der Nasen 26 und an den Flanken der Nasen 26 gebracht. Ferner wird das Blechmaterial axial nach oben in die axiale Ringvertiefung 22 um die Materialerhöhungen 30 sowie in die Hinterschneidungen 32 gedrängt.

Das fertige Zusammenbauteil gestaltet sich wie in der Fig. 3C gezeigt, und es ist auch hier zu erkennen, dass die Unterseite des Blechteils 12 im Bereich des Lochrandes 60 des durch die Nase der Matrize leicht umgeformten Ringkragens am Gewindeauslauf 62 anliegt bzw. unmittelbar oberhalb dieses steht. Hierdurch und durch den Eingriff des Blechmaterials in den Hinterschneidungen 32 wird verhindert, dass das Bolzenelement 10 nach oben aus dem Blechteil 12 herausgedrückt werden kann.

Ferner soll darauf hingewiesen werden, dass die Anlage des Blechmaterials am oder unmittelbar vor dem Gewindeauslauf auch bei noch dünneren Blechen möglich ist, wenn die entsprechende Matrize ausgelegt ist, um das Blechmaterial im Bereich des Lochrandes 60' bzw. des Ringkragens 66 so umzuformen, dass eine ausreichende Ausdehnung des Blechmaterials in die Höhe in diesem umgeformten Bereich erfolgt. Die radial nach innen und axial nach oben gerichtete Bewegung des Blechmaterials wird besonders zweckmäßig durch geneigte Flanken der Ringnase der Matrize bewerkstelligt, die sich in den schräg gestellten Seiten und der Ringvertiefung 58 abbilden.

Somit wird bei der Ausbildung des Schaftteils 16 mit einem Gewinde 17 das Blechmaterial - egal, ob in Form eines dünneren Blechteils oder eines dickeren Blechteils - bei einem einheitlichen Bolzenelement nur mittels leicht unterschiedlicher der jeweiligen Blechteildicke angepasster Matrizen so verformt, dass das Blechmaterial an dem Element in der erwünschten Weise anliegt. Konkret erfolgt die Umformung des Blechteils so, dass der dem Kopfteil 14 des Funktionselements abgewandte Bereich 60' des Blechmaterials dem dem Kopfteil zugewandten axialen Ende des Gewindes 17 gegenüberliegt und radial innerhalb des Außendurchmessers des Gewindes 17 liegt. Hierdurch wird, selbst bei einer geringfügigen Lockerung des Funktionselements im Blechteil, ein axialer Verlust des Elements verhindert, da das Blechmaterial gegen das Ende des Gewindes anstößt bzw. anstoßen wird.

Ein Beispiel für ein weibliches, d.h. hohles Einpresselement, ist in den Fig. 4A is 4D gezeigt. In den Zeichnungen gemäß den Fig. 4A bis 4D sowie 5A bis 5C und 6A bis 6C werden die gleichen Bezugszeichen verwendet wie für die bisherigen Figuren, und es gilt daher die bisherige Beschreibung sinngemäß auch für diese Figuren, weshalb hier nur auf wesentliche Unterschiede eingegangen wird.

Das Mutterelement 10' hat eine hohle mittlere Passage 70, die mit einem Innengewinde 72 versehen ist. Der Schaftteil 16 ist hier mit einem Durchmesser im Bereich des zylindrischen Abschnitts 74 seines freien Endes versehen, der dem Durchmesser des Schaftteils im Bereich der Bodenflächen 48 der radialen Vertiefungen 24 entspricht. Das Stirnende 76 des Elements ist mit einem kleinen Radius versehen, kann aber mit einer scharfen Kante an dieser Stelle versehen werden. Das Element kann selbststanzend in das Blechteil eingebracht werden. Anstatt der gezeigten Ausbildung kann der Schaftteil auf der dem Kopfteil abgewandten Seite der Nasen und Vertiefungen, d.h. im Bereich 74, mit einem Durchmesser ausgeführt werden, der größer ist als der Durchmesser des Schaftteils 16 im Bereich der Nasen 26. Dies, wie auch eine einigermaßen scharfe Stanzkante kann beispielsweise durch einen axialen Stauchvorgang am Schaftteil nach der Ausbildung der Nasen 26 und der radialen Vertiefungen 24 erreicht werden.

Das freie Stirnende 76 des Schafteils 16 kann somit, egal ob der Durchmesser größer ist als der Durchmesser des Schaftteils 16 im Bereich der Nasen 26 oder nicht, zum Durchstanzen des Blechteils ausgebildet werden, so dass das Mutterelement 10' beim Einsetzen in das Blechteil zusammen mit einer geeigneten Matrize das eigene Loch im Blechteil schneidet. D.h. das Mutterelement 10' wird selbststanzend ausgebildet.

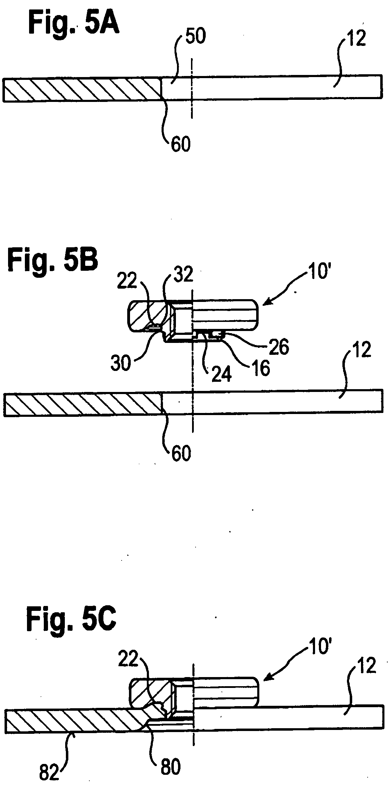

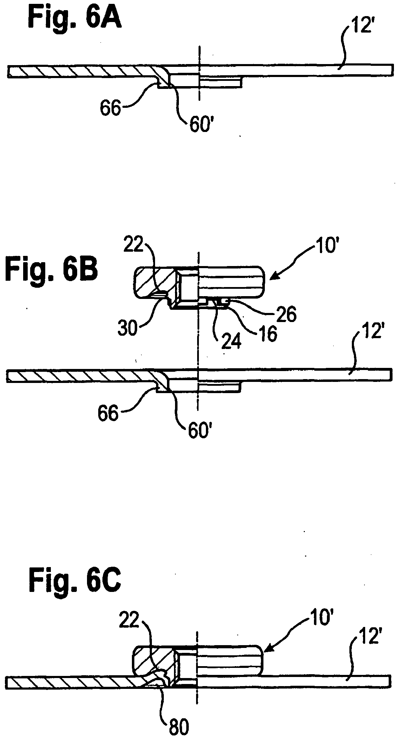

Bei der Anbringung des erfindungsgemäßen Funktionselements 10', wie in den Fig. 4A bis 4D gezeigt, an ein Blechteil 12 bzw. 12' entsprechend den Fig. 5A bis 5C und 6A bis 6C entsteht ein Zusammenbauteil mit dem besonderen Kennzeichen, dass das Blechteil sich innerhalb der Ringvertiefung 22 in den radialen Vertiefungen 24 und in den Hinterschneidungen 32 erstreckt und hierdurch den erforderlichen Auspresswiderstand bzw. die erforderliche Verdrehsicherheit gewährleistet.

Wenn das Element so ausgelegt ist, dass der Abschnitt 74 im Durchmesser größer ist als der Schaftteil 16 im Bereich der Nasen, liegt die Stirnseite 76 des Elements innerhalb einer Vertiefung 80 des Blechteils axial vor der dem Kopfteil abgewandten Seite des Blechteils im Bereich außerhalb der Vertiefung 80. Die genaue Gestalt der Vertiefung 80 wird durch eine komplementäre Gestaltung der Ringnase der Matrize (nicht gezeigt) realisiert. Auf diese Weise liegt eine planare Anschraubfläche 82 für ein anzuschraubendes Bauteil (nicht gezeigt) vor, die der Unterseite des Blechteils 12, 12' entspricht. Man merkt, dass bei dünnen Blechteilen 12' die axiale Tiefe der Ringvertiefung 22 ausgenützt wird, um eine ausreichende Bauhöhe für die Anbindung an das Blechteil 12' zu schaffen.

Wird ein erweiterter Durchmesser des Schaftteils 16 im Abschnitt 74 vorgesehen, so wird ein zusätzlicher axialer Auspresswiderstand erreicht, da dort eine Schulter gebildet wird, ähnlich bzw. entsprechend dem Gewindeauslauf bei einem Bolzenelement. Hierdurch kann bei einem weiblichen Element eine ganz ähnliche Ausbildung der Anbindung des Blechteils am Element erreicht werden wie bei einem Bolzenelement.

Ein Verfahren zur Herstellung des erfindungsgemäßen Funktionselements in Form eines männlichen Elements zeichnet sich dadurch aus, dass man von einem zylindrischen Metallstab oder Draht ausgeht, und in einem Kaltschlagverfahren einen Rohling mit einem Kopfteil, mit einem Schaftteil sowie mit einer ringförmigen axialen Vertiefung, die den Kopfteil auf der dem Schaftteil zugewandten Seite umgibt, herstellt.

Ein Materialbund wird vorzugsweise um den Schaftteil im Bereich benachbart zum Kopfteil erzeugt, und zwar vorzugsweise mit einem Durchmesser, der dem der Nasen 26 im fertigen Element entspricht. Dieser Materialbund wird durch ein weiteres Kaltschlagen des Materials des Schaftteils stellenweise verschoben, um die sich in axialer Richtung erstreckenden radialen Vertiefungen 24 und die Hinterschneidungen 32 bildenden Materialerhöhungen 30 an den dem Kopfteil 14 zugewandten Enden der radialen Vertiefungen 24 sowie die zwischen den radialen Vertiefungen verbleibenden Nasen 26 auszubilden. Anschließend wird das Gewinde 17 auf dem Schaftteil kurz vor oder unmittelbar vor den dem Kopfteil abgewandten axialen Enden der radialen Vertiefungen durch einen Walzvorgang ausgebildet. Hierdurch wächst der Durchmesser des Schaftteils so, dass der Außendurchmesser des Gewindes größer wird als der der Nasen 26.

Ein Verfahren zur Herstellung eines Funktionselements in Form eines weiblichen Elements zeichnet sich dadurch aus, dass man von einem zylindrischen Metallstab oder Draht ausgeht, und in einem Kaltschlagverfahren einen Rohling mit einem Kopfteil, mit einem Schaftteil sowie mit einer ringförmigen axialen Vertiefung, die den Kopfteil auf der dem Schaftteil zugewandten Seite umgibt, und vorzugsweise mit einem Materialbund um den Schaftteil im Bereich benachbart zum Kopfteil erzeugt, dass durch ein weiteres Kaltschlagen das Material des Schaftteils bzw. (falls vorgesehen) des Bundes stellenweise verschoben wird, um die sich in axialer Richtung erstreckenden radialen Vertiefungen und die Hinterschneidungen bildenden Materialerhöhungen an den dem Kopfteil zugewandten Enden der radialen Vertiefungen sowie zwischen den radialen Vertiefung angeordneten Nasen auszubilden, und dass eine sich axial erstreckende mittlere Passage in dem Schaftteil und in dem Kopfteil ausgebildet wird.

Bei allen Ausführungsformen können als Beispiel für den Werkstoff der Funktionselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für das Profil bzw. die Funktionselemente benutzt werden, z.B. AlMg5. Auch kommen Profile bzw. Funktionselemente aus höherfesten Magnesiumlegierungen wie beispielsweise AM50 in Frage.

### Bezugszeichenliste

- 10, 10': Bolzenelement, Mutterelement
- 12, 12': Blechteil
- 14: Kopfteil
- 16: Schaftteil
- 17: Gewinde
- 18: Unterseite des Kopfteils
- 20: Blechanlagefläche
- 22: axiale Vertiefung
- 24: radiale Vertiefung
- 26: Nasen
- 28: mittlere Längsachse
- 30: Materialerhöhung
- 32: Hinterschneidung
- 34: radial äußere Seite der Nasen
- 36: seitliche Flanke
- 38: Übergang
- 40: Bodenbereich der Ringnut
- 42: Rundung
- 44: Radius
- 46: radiale Fläche
- 48: Bodenfläche
- 50: Stanzloch
- 52: Stirnende
- 54: Oberseite des Blechteils
- 56: Unterseite des Blechteils
- 58: Ringvertiefung im Blechteil
- 58': Ringvertiefung im Blechteil
- 60: Randbereich des Stanzlochs
- 60': umgeformter Randbereich des Stanzlochs
- 62: Gewindeauslauf
- 66: Ringkragen
- 70: mittlere Passage
- 72: Innengewinde
- 74: zylindrischer Abschnitt
- 76: Stirnende des Mutterelements
- 80: Vertiefung des Blechteils
- 82: planare Anschraubfläche

## Patentansprüche

1. Funktionselement (10; 10') in Form eines Einpresselements zur Befestigung an ein Blechteil (12;12'), wobei das Funktionselement einen Kopfteil (14) und einen Schaftteil (16) aufweist, der Kopfteil auf der dem Schaftteil zugewandten Seite (18) eine ringförmige Blechanlagefläche (20) und innerhalb dieser ringförmigen Blechanlagefläche eine ringförmige axiale Vertiefung (22) aufweist, die am Übergang des Kopfteils 14) in den Schaftteil (16) diesen umgibt, wobei der Schaftteil (16) mehrere umfangsmäßig verteilte, sich in axialer Richtung erstreckende radiale Vertiefungen (24) und dazwischen sich ebenfalls axial erstreckende und radial hervorstehende Nasen (26) aufweist, **dadurch gekennzeichnet, dass** an den Stellen der radialen Vertiefungen (24), an deren dem Kopfteil zugewandten axialen Enden Materialerhöhungen (30) vorliegen, die im Bereich der ringförmigen axialen Vertiefung mit dem Kopfteil Hinterschneidungen (32) bilden.

2. Funktionselement (10; 10') nach Anspruch 1,
**dadurch gekennzeichnet,**
**dass** die Hinterschneidungen (32) sich axial innerhalb der ringförmigen axialen Vertiefung (22) befinden und vorzugsweise dass von zwei bis zwölf radiale Vertiefungen (24), vorzugsweise vier bis acht und insbesondere sechs radiale Vertiefungen (24) vorgesehen sind, wobei jede radial vorstehende Nase (26) zwischen zwei benachbarten radialen Vertiefungen (24) vorgesehen ist.

3. Funktionselement (10) nach einem der vorhergehenden Ansprüche,
**dadurch gekennzeichnet,**
**dass** es sich um ein an seinem Schaftteil (16) ein Gewinde (17) aufweisendes Bolzenelement (10) handelt, wobei der Außendurchmesser des Gewindes (17) einen Radius aufweist, der größer ist als die (maximale) radiale Abmessung von der Längsachse (28) des Schaftteils (16) zu der Bodenfläche der radialen Vertiefungen (24).

4. Funktionselement (10) nach dem Anspruch 3,
**dadurch gekennzeichnet,**
**dass** der Außendurchmesser des Gewindes (17) einen Radius aufweist, der größer ist als die maximale radiale Abmessung von der Längsachse (28) des Schaftteils (16) zu der radial äußeren Fläche der radial vorstehenden Nasen (26).

5. Funktionselement (10; 10') nach einem der vorhergehenden Ansprüche,
**dadurch gekennzeichnet,**
**dass** die Bodenflächen der radialen Vertiefungen (24) und/oder die äußeren Flächen der Nasen (26) zumindest im Wesentlichen auf jeweiligen kreiszylindrischen Flächen liegen bzw. Segmente von solchen kreiszylindrischen Flächen bilden.

6. Funktionselement (10) nach Anspruch 3,
**dadurch gekennzeichnet,**
**dass** die die Hinterschneidungen (32) bildenden Materialerhöhungen (30) eine von der mittleren Längsachse (28) des Funktionselements gemessene maximale radiale Abmessung aufweisen, die der radialen Abmessung des Gewindes (17) zumindest im Wesentlichen entspricht.

7. Funktionselement (10; 10') nach einem der vorhergehenden Ansprüche,
**dadurch gekennzeichnet,**
**dass** das Gewinde (17) an seinem dem Kopfteil (14) zugewandten Ende unmittelbar vor den dem Kopfteil (14) abgewandten Enden der radialen Vertiefungen (24) bzw. der Nasen (26) angeordnet ist.

8. Funktionselement (10') nach einem der vorhergehenden Ansprüche 1 oder 2,
**dadurch gekennzeichnet,**
**dass** es sich bei dem Einpresselement um ein hohles Element (10') handelt, dessen hohle mittlere Passage (70) mit einem Gewinde (72) versehen ist oder versehbar ist.

9. Zusammenbauteil bestehend aus einem Funktionselement (10; 10') nach einem der vorhergehenden Ansprüche in Kombination mit einem Blechteil (12; 12'),
**dadurch gekennzeichnet,**
**dass** das Blechteil (12; 12') sich innerhalb der Ringvertiefung (22) und in die Hinterschneidungen (32) hinein erstreckt und hierdurch den erforderlichen Auspresswiderstand bzw. die erforderliche Verdrehsicherheit gewährleistet und dass das Blechmaterial zwischen den Materialerhöhungen (30) an der Oberfläche des Elements (10; 10') anliegt.

10. Zusammenbauteil nach Anspruch 9,
**dadurch gekennzeichnet,**
**dass** die dem Kopfteil (14) abgewandte Seite des Blechteils (12; 12') im Bereich benachbart zum Schaftteil (16) bei einem Bolzenelement unmittelbar vor dem dem Kopfteil (14) zugewandten Ende des Gewindes (17) und bei einem hohlen Element (10') vor dem freien Stirnende (76) des hohlen Schaftteils angeordnet ist.

11. Zusammenbauteil nach Anspruch 9,
**dadurch gekennzeichnet,**
**dass** das Blechteil (12; 12') auf der dem Kopfteil abgewandten Seite einen Ringkragen (66) aufweist, dessen radial innere Fläche eng an den Nasen (26) bzw. den Bodenflächen der radialen Vertiefungen (24) anliegt.

12. Zusammenbauteil nach dem Anspruch 10,
**dadurch gekennzeichnet,**
**dass** das dem Kopfteil (14) abgewandte axiale Ende des Ringkragens (66) benachbart zum Schaftteil (16) bei einem Bolzenelement (10) unmittelbar vor dem dem Kopfteil (14) zugewandten Ende des Gewindes (17) und bei einem hohlen Element unmittelbar vor dem freien Stirnende (76) des hohlen Schaftteils angeordnet ist.

13. Verfahren zur Herstellung eines Funktionselements (10) in Form eines Einpressbolzens (10) nach einem der vorhergehenden Ansprüche 1 bis 7,
**dadurch gekennzeichnet,**
**dass** man von einem zylindrischen Metallstab oder Draht ausgeht, und in einem Kaltschlagverfahren einen Rohling mit einem Kopfteil (14), mit einem Schaftteil (16) sowie mit einer ringförmigen axialen Vertiefung (22), die den Schaftteil (16) auf der dem Schaftteil (16) zugewandten Seite des Kopfteils (14) umgibt, und mit einem Materialbund um den Schaftteil im Bereich benachbart zum Kopfteil (14) erzeugt, dass durch ein weiteres Kaltschlagen das Material des Bundes stellenweise verschoben wird, um die sich in axialer Richtung erstreckenden radialen Vertiefungen (24) und die Hinterschneidungen (32) bildenden Materialerhöhungen (30) an den dem Kopfteil (14) zugewandten Enden der radialen Vertiefungen (24) sowie zwischen den radialen Vertiefungen (24) angeordnete Nasen (26) auszubilden, und dass anschließend ein Gewinde (17) auf dem Schaftteil (16) kurz vor oder unmittelbar vor den dem Kopfteil (14) abgewandten axialen Enden der radialen Vertiefungen (24) ausgebildet wird.

14. Verfahren zur Herstellung eines Funktionselements in Form eines hohlen Einpresselements nach einem der vorhergehenden Ansprüche 1,2 oder 8,
**dadurch gekennzeichnet,**
**dass** man von einem zylindrischen Metallstab oder Draht ausgeht, und in einem Kaltschlagverfahren einen Rohling mit einem Kopfteil (14), mit einem Schaftteil (16) sowie mit einer ringförmigen axialen Vertiefung (22), die den Schaftteil (16) auf der dem Schaftteil zugewandten Seite des Kopfteils (14) umgibt, und mit einem Materialbund um den Schaftteil (16) im Bereich benachbart zum Kopfteil (14) erzeugt, dass durch ein weiteres Kaltschlagen das Material des Bundes stellenweise verschoben wird, um die sich in axialer Richtung erstreckenden radialen Vertiefungen (24) und die Hinterschneidungen (32) bildenden Materialerhöhungen (30) an den dem Kopfteil (14) zugewandten Enden der radialen Vertiefungen (24) sowie zwischen den radialen Vertiefungen (24) angeordnete Nasen (26) auszubilden, und dass eine sich axial erstreckende mittlere Passage (70) im Schaftteil (16) und im Kopfteil (14) ausgebildet wird.

15. Verfahren nach Anspruch 14,
**dadurch gekennzeichnet,**
**dass** das freie Stirnende (76) des Mutterelements (10') gestaucht wird, um den Radius des Stirnendes (70) von der Längsachse (28) zu erhöhen, damit dieser größer ist als der des Schaftteils (16) im Bereich der radialen Vertiefungen (24) und der des Schaftteils im Bereich der Nasen (26) und gegebenenfalls, um eine Stanzkante am freien Ende des Schaftteils (16) auszubilden.

## Claims

1. A functional element (10; 10') in the form of a press-in element for attachment to a sheet metal part (12; 12'), wherein the functional element has a head part (14) and a shaft part (16), the head part has a ring-shaped sheet metal contact surface (20) at the side (18) adjacent the shaft part and a ring-shaped axial recess (22) inside this ring-shaped sheet metal contact surface and surrounding the shaft part at the transition of the head part (14) into the shaft part (16), wherein the shaft part (16) has a plurality of circumferentially distributed radial recesses (24) extending in the axial direction and between these noses (26) which likewise extend axially and project radially, **characterized in that** raised material portions (30) are present at the positions of the radial recesses (24) at their axial ends adjacent the head part, with the raised material portions forming undercuts (32) with the head part in the region of the ring-shaped recess.

2. A functional element (10; 10') in accordance with claim 1,
**characterized in that**
the undercuts (32) are axially located within the ring-shaped axial recess (22); and preferably **in that** from two to twelve radial recesses (24), preferably four to eight and in particular six radial recesses (24) are provided, wherein each radially projecting nose (26) is provided between two adjacent radial recesses (24).

3. A functional element (10) in accordance with one of the preceding claims,
**characterized in that**
it is a bolt element (10) having a thread (17) at its shaft part (16),
wherein the outer diameter of the thread (17) has a radius which is larger than the (maximum) radial dimension from the longitudinal axis (28) of the shaft part (16) to the base surface of the radial recesses (24).

4. A functional element (10) in accordance with claim 3,
**characterized in that**
the outer diameter of the thread (17) has a radius which is larger than the maximum radial dimension from the longitudinal axis (28) of the shaft part (16) to the radially outer surface of the radially projecting noses (26).

5. A functional element (10; 10') in accordance with any one of the preceding claims,
**characterized in that**
the base surfaces of the radial recesses (24) and/or the outer surfaces of the noses (26) lie at least substantially on respective circularly cylindrical surfaces or form segments of such circularly cylindrical surfaces.

6. A functional element (10) in accordance with claim 3,
**characterized in that**
the raised material portions (30) forming the undercuts (32) have a maximum radial dimension measured from the central longitudinal axis (28) of the functional element which at least substantially corresponds to the radial dimension of the thread (17).

7. A functional element (10; 10') in accordance with any one of the preceding claims,
**characterized in that**
the thread (17) is arranged at its end adjacent the head part (14) directly before the ends of the radial recesses (24) or of the noses (26) remote from the head part (14).

8. A functional element (10') in accordance with one of the preceding claims 1 or 2,
**characterized in that**
the press-in element is a hollow element (10') the hollow central passage (70) of which is provided with a thread (72) or can be provided with a thread.

9. A component assembly comprising a functional element (10; 10') in accordance with any one of the preceding claims in combination with a sheet metal part (12, 12'),
**characterized in that**
the sheet metal part (12; 12') extends within the ring recess (22) and into the undercuts (32) and hereby ensures the required press-out resistance and/or the required security against rotation; and **in that** the sheet metal material contacts the surface of the element (10; 10') between the elevated material portions (30).

10. A component assembly in accordance with claim 9,
**characterized in that**
the side of the sheet metal part (12; 12') remote from the head part (14) is arranged, in a bolt element, in the region adjacent to the shaft part (16) directly before the end of the thread (17) adjacent the head part (14) and, in a hollow element (10'), before the free end face (76) of the hollow shaft part.

11. A component assembly in accordance with claim 9,
**characterized in that**
the sheet metal part (12; 12') has a ring collar (66) at the side remote from the head part the radially inner surface of which closely contacts the noses (26) and/or the base surfaces of the radial recesses (24).

12. A component assembly in accordance with claim 10, **characterized in that**
the axial end of the ring collar (66) remote from the head part (14) adjacent to the shaft part (16) is arranged, in a bolt element (10), directly before the end of the thread (17) adjacent the head part (14) and, in a hollow element, directly before the free end face (76) of the hollow shaft part.

13. A method of manufacturing a functional element (10) in the form of a press-in bolt (10) in accordance with any one of the preceding claims 1 to 7,
**characterized in that**
one starts from a cylindrical metal rod or wire and in a cold heading process generates a blank with a head part (14), with a shaft part (16) and also with a ring-shaped axial recess (22) which surrounds the shaft part (16) at the side of the head part (14) adjacent to the shaft part (16) and with a material collar around the shaft part (16) in the region adjacent the head part (14); **in that** the material of the collar is locally displaced by a further cold heading process in order to form the radial recesses (24) extending in the axial direction and raised material portions (30) forming the undercuts (32) at the ends of the radial recesses (24) adjacent the head part (14) and also noses (26) arranged between the radial recesses (24); and **in that** a thread (17) is subsequently formed on the shaft part (16) shortly before or directly before the axial ends of the radial recesses (24) remote from the head part (14).

14. A method of manufacturing a functional element in the form of a hollow press-in element in accordance with any one of the preceding claims 1, 2 or 8,
**characterized in that**
one starts from a cylindrical metal rod or wire and in a cold heading process generates a blank with a head part (14), with a shaft part (16) and also with a ring-shaped axial recess (22) which surrounds the shaft part (16) at the side of the head part (14) adjacent to the shaft part and with a material collar around the shaft part (16) in the region adjacent the head part (14); **in that** the material of the collar is locally displaced by a further cold heading process in order to form the radial recesses (24) extending in the axial direction and raised material portions (30) forming the undercuts (32) at the ends of the radial recesses (24) adjacent the head part (14) and also noses (26) arranged between the radial recesses (24); and **in that** an axially extending central passage (70) is formed in the shaft part (16) and in the head part (14).

15. A method in accordance with claim 14,
**characterized in that**
the free end face (76) of the nut element (10') is compressed in order to increase the radius of the end face (70) from the longitudinal axis (28) so that this becomes larger than the radius of the shaft part (16) in the region of the radial recesses (24) and the radius of the shaft part in the region of the noses (26) and optionally in order to form a piercing edge at the free end of the shaft part (16).

## Revendications

1. Élément fonctionnel (10 ; 10') sous la forme d'un élément à enfoncer à la presse pour la fixation sur une pièce en tôle (12 ; 12'), dans lequel l'élément fonctionnel comprend une partie formant tête (14) et une partie formant tige (16), la partie formant tête comporte, sur le côté (18) tourné vers la partie formant tige, une surface d'appui sur tôle (20) de forme annulaire et, à l'intérieur de cette surface d'appui sur tôle de forme annulaire, un renfoncement axial (22) de forme annulaire, qui entoure la partie formant tige (16) à la transition de la partie formant tête (14) vers la partie formant tige (16), dans lequel la partie formant tige (16) comporte plusieurs renfoncements radiaux (24) répartis à sa périphérie et s'étendant en direction axiale, et entre ceux-ci des tétons (26) qui s'étendent également axialement et dépassent radialement, **caractérisé en ce qu'**aux emplacements des renfoncements radiaux (24) et à leurs extrémités axiales tournées vers la partie formant tête il existe des surélévations de matière (30) qui forment des contre-dépouilles (32) avec la partie formant tête dans la région du renfoncement axial de forme annulaire.

2. Élément fonctionnel (10 ; 10') selon la revendication 1,
**caractérisé en ce que** les contre-dépouilles (32) se trouvent axialement à l'intérieur du renfoncement axial (22) de forme annulaire, et **en ce qu'**il est de préférence prévu de deux à douze renfoncements radiaux (24), de préférence de quatre à huit et en particulier six renfoncements radiaux (24), de sorte que chaque téton en saillie radiale (26) est prévu entre deux renfoncements radiaux voisins (24).

3. Élément fonctionnel (10) selon l'une des revendications précédentes,
**caractérisé en ce qu'**il s'agit un élément de boulon (10) comportant un filetage (17) sur sa partie formant tige (16), le diamètre extérieur du filetage (17) présentant un rayon qui est plus grand que la dimension radiale (maximum) depuis l'axe longitudinal (28) de la partie formant tige (16) jusqu'à la surface au fond des renfoncements radiaux (24).

4. Élément fonctionnel (10) selon la revendication 3,
**caractérisé en ce que** le diamètre extérieur du filetage (17) présente un rayon qui est plus grand que la dimension radiale maximum depuis l'axe longitudinal (28) de la partie formant tige (16) jusqu'à la surface radiale extérieure des tétons en saillie radiale (26).

5. Élément fonctionnel (10 ; 10') selon l'une des revendications précédentes,
**caractérisé en ce que** les surfaces au fond des renfoncements radiaux (24) et/ou les surfaces extérieures des tétons (26) sont situées au moins sensiblement sur des surfaces cylindriques respectives à base circulaire, ou bien forment des segments de telles surfaces cylindriques à base circulaire.

6. Élément fonctionnel (10) selon la revendication 3,
**caractérisé en ce que** les surélévations de matière (30) formant les contre-dépouilles (32) présentent une dimension radiale maximum, mesurée depuis l'axe longitudinal médian (28) de l'élément fonctionnel, qui correspond au moins sensiblement à la dimension radiale du filetage (17).

7. Élément fonctionnel (10 ; 10') selon l'une des revendications précédentes,
**caractérisé en ce que** le filetage (17) est ménagé, à son extrémité tournée vers la partie formant tête (14), immédiatement devant les extrémités, détournées de la partie formant tête (14), des renfoncements radiaux (24) ou respectivement des tétons (26).

8. Élément fonctionnel (10') selon l'une des revendications précédentes 1 ou 2,
**caractérisé en ce que** l'élément à enfoncer à la presse est un élément creux (10') dont le passage central creux (70) est doté ou susceptible d'être doté d'un taraudage (72).

9. Assemblage de composants constitué d'un élément fonctionnel (10 ; 10') selon l'une des revendications précédentes, en combinaison avec une pièce en tôle (12 ; 12'),
**caractérisé en ce que** la pièce en tôle (12 ; 12') s'étend en pénétrant dans le renfoncement annulaire (22) et dans les contre-dépouilles (32), et garantit grâce à cela la résistance nécessaire à l'éjection ou respectivement le blocage nécessaire antirotation, et **en ce que** le matériau de la tôle s'applique entre les surélévations de matière (30) sur la surface de l'élément (10 ; 10').

10. Assemblage de composants selon la revendication 9,
**caractérisé en ce que**, dans la région voisine de la partie formant tige (16), le côté, détourné de la partie formant tête (14), de la pièce en tôle (12 ; 12') est agencé directement avant l'extrémité du filetage (17) tournée vers la partie formant tête (14) dans le cas d'un élément de boulon, et est agencé avant l'extrémité frontale libre (76) de la partie formant tige creuse dans le cas d'un élément creux (10').

11. Assemblage de composants selon la revendication 9,
**caractérisé en ce que** la pièce en tôle (12 ; 12') comporte, sur le côté détourné de la partie formant tête, une collerette annulaire (66), dont la surface radialement intérieure s'applique de manière intime contre les tétons (26) ou respectivement contre la surface au fond des renfoncements radiaux (24).

12. Assemblage de composants selon la revendication 10,
**caractérisé en ce que** l'extrémité axiale, détournée de la partie formant tête (14), de la collerette annulaire (66) au voisinage de la partie formant tige (16) est agencée directement avant l'extrémité, tournée vers la partie formant tête (14) du filetage (17) dans le cas d'un élément de boulon (10), et est agencée directement avant l'extrémité frontale libre (76) de la partie formant tige creuse dans le cas d'un élément creux.

13. Procédé pour la réalisation d'un élément fonctionnel (10) sous la forme d'un boulon à enfoncer à la presse (10) selon l'une des revendications précédentes 1 à 7,
**caractérisé en ce que** l'on utilise au départ une tige ou un fil métallique cylindrique et, dans un processus de frappe à froid, on engendre une ébauche avec une partie formant tête (14), avec une partie formant tige (16), ainsi qu'avec un renfoncement axial (22) de forme annulaire, qui entoure la partie formant tige (16) sur le côté de la partie formant tête (14) tourné vers la partie formant tige (16), et avec une collerette de matière autour de la partie formant tige dans la région voisine la partie formant tête (14), **en ce qu'**à la suite d'une nouvelle frappe à froid, le matériau de la collerette est localement déplacé afin de réaliser les renfoncements radiaux (24) s'étendant en direction axiale et les surélévations de matière (30) formant les contre-dépouilles (32), aux extrémités, tournées vers la partie formant tête (14), des renfoncements radiaux (24), ainsi que les tétons (26) agencés entre les renfoncements radiaux (24), et **en ce que** l'on réalise ensuite un filetage (17) sur la partie formant tige (16) peut avant ou immédiatement avant les extrémités axiales, détournées de la partie formant tête (14), des renfoncements radiaux (24).

14. Procédé pour la réalisation d'un élément fonctionnel sous la forme d'un élément creux à enfoncer à la presse selon l'une des revendications précédentes 1, 2 ou 8,
**caractérisé en ce que**
on utilise au départ une tige ou un fil métallique cylindrique, dans une procédure de frappe à froid, on réalise une ébauche avec une partie formant tête (14), avec une partie formant tige (16), ainsi qu'avec un renfoncement axial (22) de forme annulaire, qui entoure la partie formant tige (16) sur le côté de la partie formant tête (14) tourné vers la partie formant tige et comprenant une collerette de matière autour de la partie formant tige (16) dans la région voisine de la partie formant tête (14), **en ce qu'**à la suite d'une nouvelle frappe à froid la matière de la collerette est localement déplacée afin de réaliser les renfoncements radiaux (24) s'étendant en direction axiale et les surélévations de matière (30) formant les contre-dépouilles (32), aux extrémités, tournées vers la partie formant tête (14), des renfoncements radiaux (24), ainsi que les tétons (26) agencés entre les renfoncements radiaux (24), et **en ce que** l'on réalise un passage central s'étendant axialement (70) dans la partie formant tige (16) et dans la partie formant tête (14).

15. Procédé selon la revendication 14,
**caractérisé en ce que** l'extrémité frontale libre (76) de l'élément formant écrou (10') est écrasée afin d'augmenter le rayon de l'extrémité frontale (70) depuis l'axe longitudinal (28), afin que celui-ci soit plus grand que celui de la partie formant tige (16) dans la région des renfoncements radiaux (24) et que celui de la partie formant tige dans la région des tétons (26), et le cas échéant pour former une arête de poinçonnage à l'extrémité libre de la partie formant tige (16).
